# NEW EUROPEAN PATENT SPECIFICATION

(11) **EP 2 393 736 B2**
(45) Date of publication and mention of the opposition decision: **18.08.2021**
(45) Mention of the grant of the patent: 14.08.2013
(21) Application number: 10704219.4
(22) Date of filing: 05.02.2010
(51) Int. Cl.: B65G 1/04, B65G 1/137

(54) **METHOD AND DEVICE FOR COLLECTING DIFFERENT PRODUCTS FORMING PART OF AN ORDER**
VERFAHREN UND VORRICHTUNG ZUM SAMMELN VERSCHIEDENER PRODUKTE, DIE TEIL EINES AUFTRAGS BILDEN
PROCÉDÉ ET DISPOSITIF DE COLLECTE DE DIFFÉRENTS PRODUITS FORMANT PARTIE D'UNE COMMANDE

(30) Priority: 06.02.2009 NL 1036522; 09.10.2009 NL 1037378
(43) Date of publication of application: 14.12.2011
(73) Proprietor: Vanderlande Industries B.V., 5466 RB Veghel (NL)
(72) Inventor: DUMOULIN, Bastiaan Maria Ludovicus, 5247 WT Rosmalen (NL)
(74) Representative: Algemeen Octrooi- en Merkenbureau B.V.
(86) International application number: PCT/NL2010/000019
(87) International publication number: WO 2010/090515

(56) References cited:
- EP-A1- 2 128 047
- WO-A1-2007/134841
- WO-A1-2008/119497
- WO-A1-2009/150684
- DE-A1-102006 025 620
- DE-A1-102007 016 453
- DE-U1- 9 103 197
- JP-A- 8 012 012
- JP-A- H0 812 012
- JP-A- H07 187 330
- JP-A- H07 187 331
- JP-A- H08 133 426
- JP-A- H08 175 620
- JP-A- H08 175 621
- JP-A- 2000 118 615
- JP-A- 2003 012 119
- US-A- 5 733 098
- US-A1- 2003 185 656

## Description

The present invention relates to a method for collecting a number of different products forming part of an order in a product picking system, said product picking system comprising a tray warehouse provided with racks extending parallel to each other, each rack comprising a number of tray storage positions provided beside and above each other, in which tray storage positions a tray carrying a number of identical products is present, and a rack operating device which is movable along and parallel to a rack in the longitudinal direction and the vertical direction of said rack, which rack operating device is provided with at least one product picking unit comprising a product manipulator and a product buffer, wherein products forming part of the order are removed from the rack by means of the rack operating device, wherein at least two different products from said number of products forming part of the order are collected on the rack operating device one after the other from different trays present in a tray storage position by means of the rack operating device, after which the products placed on said rack operating device are discharged from the rack operating device at a delivery location, wherein the products to be placed on the rack operating device one after the other are removed from said different trays and placed on the product buffer by means of the product manipulator.

WO 2007/134841 discloses a system and a method for collecting different products on a picking pallet. To that end a pallet warehouse and a tray warehouse are provided. In the pallet warehouse, pallets with products stacked in layers thereon are stored. Palletized products from the pallet warehouse are transferred to a separate tray in layers by means of a depalletizer, which tray is stored in the warehouse. Picking pallets are disposed at a dispatch station. A tray carrying one or more products to be stacked on a picking pallet is collected from the tray warehouse and conveyed to the dispatch station. After the required individual products have been removed from the tray in order to be placed on a picking pallet, the partially empty tray is returned to the tray warehouse or, if the tray is completely empty, the tray is returned to the depalletizer.

WO 2008/119497 discloses a method for collecting a number of different products forming part of an order according to the preamble of claim 1. The method is used in a product picking system comprising a rack with tray storage positions provided beside and above each other, a movable tray lift, a stationary lift provided with an unloading device, and a conveyor belt. A tray carrying one or more products to be picked is removed from the rack by means of the movable tray lift and placed in the stationary lift. The stationary lift moves the tray to the level of a conveyor belt, where one or more products is (are) removed from the tray by the unloading device and placed on the conveyor belt.

JP 08-133426 discloses a rack operating device. The device is to that end provided with a buffer for products formed by a number of horizontal slats arranged side by side, the upper sides of which define a support surface for products. The transfer device further comprises four forks, which are each built up of a number of horizontally extending arms, which arms define an arm support surface for products. By moving a fork in vertical direction with respect to the buffer, the arms thereof pass vertically through the spaces between slats of the buffer, and as a result of this vertical movement a product can be transferred from the fork to at least that part of the buffer which is associated with said fork. To remove a product (or products) from the rack by means of a particular fork, the support surface of the buffer is first moved to a position level with the support surface of a trey present in the rack, which, like the buffer, is built up of a number of side-by-side slats. Then the arm support surface of the fork is positioned under the support surface of the buffer, and the fork is moved in horizontal direction outside the reach of the transfer device to a position under the product to be removed from the rack. The fork is then moved vertically to a level higher than the tray and the buffer so as to lift the products from the tray. Subsequently the fork is moved back to within the reach of the buffer of the transfer device at said higher level and lowered relative to the buffer so as to thus transfer the product from the fork to the buffer. Each of the forks is further provided with a stop which pushes all the products that may already be present on the part of the buffer associated with a fork from the buffer onto the tray in the rack during the aforesaid horizontal movement of said fork from the transfer device to a position in the rack, after which said products, together now with the product (or products) to be removed from the rack, are lifted and moved back at said higher level relative to the buffer to a position above the buffer, whereupon said products are lowered onto the buffer. Moving all the products present on the part of the buffer associated with the fork in question away from the buffer into the rack as described above is necessary with the known transfer device because otherwise other products already present on the buffer will obstruct the return movement of the fork, on which a product removed from the rack is present, from the rack to within the reach of the transfer device, as said products present on the buffer will lie in the path of the fork in that case. A drawback of the known transfer device as described above is thus the fact that the collecting of the products on the transfer device is a laborious, trouble-prone process on account of the frequently required, partially sliding transfer of products between the buffer of the transfer device and a tray in the rack.

Accordingly it is an object of the present invention to provide a method wherein different products from a rack can be collected on the rack operating device in a simple and trouble-free manner.

This object is accomplished with the method described in the introduction wherein, in accordance with the method according to the invention, while a second product of said number of products is being placed from a tray on the product buffer, a first product from another tray, which is already present on the product buffer, is shifted on the product buffer itself, so that the second product can be placed adjacent to the first product on the product buffer by means of the product manipulator. In this way it is possible to use a product manipulator of simple design, because each different product to be successively collected can be placed at the same position on the product buffer by the product manipulator. The above analogously applies, of course, if several products, whether different or identical are already present on the product buffer, or if several identical products are collected from one tray at a time by means of the product manipulator. In this case the products that are already present on the buffer are shifted while another, different product is being placed on the product buffer so as to make space for said further product or products. Since products which are already present on the product buffer are shifted on the product buffer itself, i.e. within the reach of the product buffer, said products need not be moved back from the product buffer to a rack first, with the attendant risk of malfunction, in order to be able to collect a further product on the rack operating device, but said products will remain on the product buffer itself. Thus a method is provided by means of which a number of products forming part of an order can be collected on the rack operating device from different trays in a simple and trouble-free manner.

Another advantage of the method according to the present invention is that because at least two different products from the number of products forming part of the order are collected in succession on the rack operating device from different trays present at a tray storage position by means of the rack operating device, after which the products placed on the rack operating device are discharged from the rack operating device at a delivery location, the number of movements of the rack operating device between tray storage positions and the delivery location is reduced. With the method according to the present invention, the rack operating device is not moved forward and backward between a respective tray storage position and the delivery location each time a product is to be moved from a rack to the delivery location, but the rack operating device first stops at a number of different trays storage positions for collecting a number of products from trays at the respective different trays storage positions, and subsequently the rack operating device is moved to the delivery location, where said number of products is discharged from the rack operating device. In this way the efficiency of picking products is significantly increased. Moreover, when using the method according to the invention it is no longer necessary to remove a tray from the rack and convey it to the delivery location, remove one or more products from the tray and subsequently return the tray to the rack in order to carry out a particular picking order. As a result, the number of conveying operations between a rack and the delivery location is reduced, which thus leads to an increased efficiency.

By using a single product picking unit comprising a product manipulator and a product buffer, by means of which product picking unit different products can be collected, it is furthermore possible to make an optimum use of the product manipulator, since the latter can be used for collecting several products from different trays on the rack operating device. Thus the efficiency of an individual product picking unit is high.

A high efficiency of the rack operating device is achieved if products from trays present in two racks disposed on either side of the rack operating device are placed on the rack operating device while different products from different trays are successively being placed on the rack operating device. Thus, only one rack operating device is needed for picking products from two opposite racks.

In an advantageous embodiment, the product picking system further comprises conveying means for conveying products from the delivery location to a picking pallet, which products are transferred from the rack operating device to the conveying means at the delivery location. This makes it possible to stack the products on a picking pallet at a location further removed from the racks, or even outside the tray warehouse. Preferably, the products from said number of products are transferred to the conveying means in a desired order at a delivery location.

It is advantageous in that regard if the conveying means comprise a product conveyor for conveying products from the delivery location to the picking pallet, which delivery location extends along part of the length of the product conveyor, whilst at least one product from said number of products is transferred to the product conveyor at a predetermined position along the length of the product conveyor each time during the transfer of said number of products to the product conveyor. This achieves that products can be placed on the product conveyor in a desired order, which desired order need not necessarily be the same as the order in which products are arranged on the rack operating device.

Independently of the manner of further transport of products from the delivery location, it is advantageous if products are discharged from the rack operating device in a desired order at the delivery location. This is understood to include the simultaneous discharge in one operation of the rack operating device of products present on the rack operating device if the products are already present on the rack operating device in the desired order, in which case the products are discharged from the rack operating device in close succession, for example at an upstream end of a product conveyor forming the delivery location.

Within this framework it is also advantageous if the at least two different products from the number of products forming part of the order which are being collected on the rack operating device itself are placed on the rack operating device in a desired order. This makes it possible to use a rack operating device of simple design. Since the products are placed on the rackoperating device in the desired order already, the products can be discharged from the rack operating device in a simple manner whilst retaining the desired order.

The product manipulator may comprise a number of individually controllable, parallel support arms extending transversely to the longitudinal direction of the rack, which are movable from and to a tray in a tray storage position for lifting a product from the tray via the underside of the product. Lifting the product from the underside of the product makes it possible to lift the product from the tray in a reliable manner, independently of the shape of the product or the material of which it is made.

In order to be able to lift a product from a tray in a stable manner, respective upper surfaces of the support arms may define an at least substantially horizontal arm support surface.

The product buffer may comprise a belt conveyor, a product support surface of which belt conveyor is positioned at least substantially at the same level as the arm support surface of the support arms. On said product buffer, a number of products that have been successively removed from different trays by means of the product manipulator can be collected. It is noted in this connection that the phrase "substantially the same level" is to be understood to mean that preferably the product support surface of the belt conveyor is positioned slightly higher than the arm support surface of the support arms, preferably at most 10 mm higher, furthermore preferably between 2 mm and 5 mm higher. Thus, a product can be transferred from the support arms to the belt conveyor in a simple manner by driving the belt conveyor and moving the support arms in synchrony therewith. It may also be considered in this regard to position the support surface of the belt conveyor at a small angle relative to the arm support surface, with the support surface gradually sloping upwards from a side of the product picking unit from a level the same as, or even slightly lower than, the arm support surface to a level slightly higher than the arm support surface at the location of the centre of the product picking unit.

The tray preferably has a bottom plate provided with a number of vertically extending ribs, whose upper edges form a support for the products, wherein said support arms are spaced apart by at least substantially the same distance as the ribs, being translatable between said ribs, seen in the longitudinal direction of the ribs. In this way the space required for the support arms under the ribs is created in a simple manner.

In a very advantageous embodiment, the belt conveyor is vided in a stationary posittion on the rack operating device, extending beside a support arm, seen in the longitudinal direction of the support arm in question. Thus, products can be transferred from the support arms to the stationary belt conveyor, whereupon the support arms can remove a further product from another tray.

It is advantageous in that case if the stationary belt conveyor is driven when a front edge of a product removed from a tray by means of the product manipulator comes within the reach of the belt conveyor, with the drives of the belt conveyor and the product manipulator being geared to each other such that the product is placed on the belt conveyor adjacent to a further product that is already present on the belt conveyor.

To realise a stable transfer of a product from the support arms it is advantageous if a belt conveyor is provided or on either side of each support arm.

In an efficient embodiment, a rack is provided on either side of the rack operating device, with the support arms being movable from and to trays in tray storage positions located on either side of the rack operating device. The support arms are preferably movable between the aforesaid belt conveyors provided on either side of each support arm, so that products can be transferred from the support arms to the belt conveyors at the location of the two end sides of the belt conveyors.

The present invention will now be explained in more detail with reference to a description of a preferred embodiment of a method according to the present invention, in which:
Figure 1 schematically shows an embodiment of a system for collecting different products on picking pallets;
Figure 2 is a schematic, isometric view of a part of the system of figure 1;
Figure 3a is a schematic top plan view of a part of a rack operating device, which is not part of the present invention; ;
Figure 3b is a schematic sectional view along the line IIIb-IIIb in figure 3a;
Figure 3c is a schematic sectional view along the line IIIc-IIIc in figure 3a;
Figure 4 is a schematic top plan view of the part of the system that is shown in figure 3a in a different position thereof; and
Figure 5, figure 6 and figure 7 are schematic, isometric views of a part of a rack operating device.

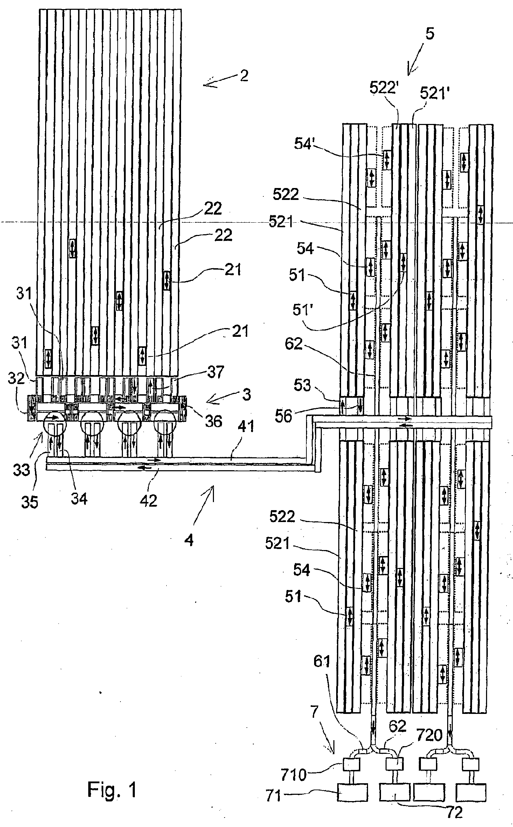

In figure 1 a system for collecting different products on a picking pallet is schematically shown. Said system comprises a pallet warehouse 2, in which product pallets carrying identical products 11 stacked in layers can be stored. At a depalletizer 3, individual layers of products from a product pallet are placed on trays 10, after which the trays are conveyed to a tray warehouse 5 via a tray conveyor 4. In the tray warehouse 5, the individual trays 10 are stored. From the tray warehouse 5, individual products 11 are conveyed to palletizers 7 by means of product conveyors 61, 62, at which palletizers the products are stacked on picking pallets by stackers 71, 72. The picking pallets must be stacked with different products forming part of a particular customer's order. Within the framework of the present invention, the designation "product pallet" or "picking pallet" is understood to include every other usual and suitable carrier for products, such as a roll-container, for example.

Within the framework of the present invention the word "product" is understood to mean a so-called case, which may be a box-like package containing one or more products or, for example, a package of six PET bottles or the like wrapped in plastic or, for example, a crate containing beer bottles or the like.

The pallet warehouse 2 comprises a number of racks 22 extending parallel to each other. The racks 22 comprise storage positions disposed beside and above each other, in which product pallets can be placed. A respective product pallet can be conveyed from and to a particular storage position in a rack 22 by means of warehouse cranes in the form of pallet cranes 21. A pallet crane 21 is provided between two respective racks 22. A pallet crane 21 can place pallets in and remove pallets from racks 22 disposed on either side of the pallet crane. The pallet crane 21 is furthermore movable in longitudinal direction between the two adjacent racks 22, whilst it can also move in vertical direction and thus function as a pallet lift. A fork lift truck may be used as an alternative to a pallet crane 21.

At the command of a central control system, a desired product pallet is removed from a rack 22 by a pallet crane 21 and placed on a pallet transfer conveyor 31. The pallet transfer conveyor 31 is a chain conveyor which moves the pallet onto a roller conveyor 32 which conveys the pallet in question to a depalletizer 33. The depalletizer 33 is designed for transferring the upper layer of a pallet with identical products stacked in layers thereon, or at least a number of uppermost products or a pallet, to a waiting tray on a belt conveyor 34. It is conceivable within this framework for a single pallet layer to be divided over two trays, with any remaining products from the pallet layer in question being placed on a third tray, with or without the addition of products from a next pallet layer. This may take place if the product support surface of a tray is smaller than the product support surface of a product pallet or if the products of the layer on the product pallet are stacked closer together than on the tray, for example, although it is advantageous if a product support surface of the tray has the same surface area as a product support surface of a product pallet.

If a tray is filled with a single layer of products from a pallet, the tray is placed on the forward part 41 of a tray conveyor 4. More specifically, the part 41 of the tray conveyor 4 is a belt conveyor for conveying full trays carrying a single layer of identical products from the depalletizer 3 to the tray warehouse 5. A possible embodiment of a depalletizer is described in WO 2007/134841.

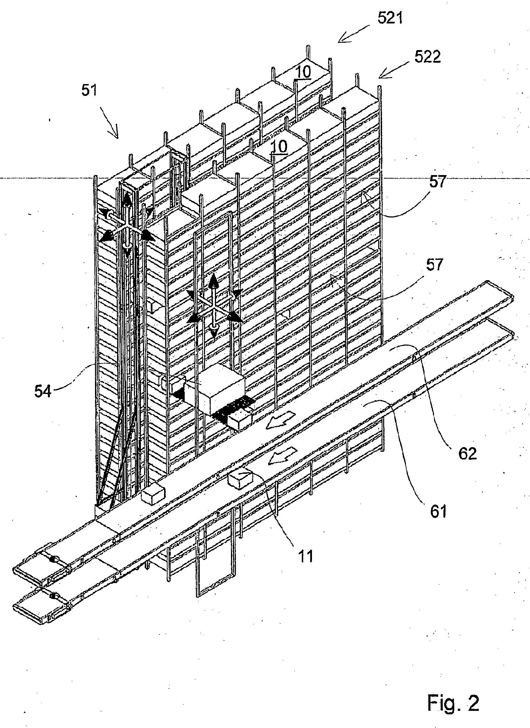

The tray warehouse 5 comprises a number of tray storage positions 57 arranged beside and above each other in racks extending parallel to each other. Buffer racks 521 function for temporary (buffer) storage of trays. Picking racks 522 are used for the pickable storage of trays, as will be explained in more detail yet hereinafter. Also refer to figure 2, which shows part of the tray warehouse 5. Provided between a buffer rack 521 and a picking rack 522 is a warehouse crane in the form of a tray crane 51. At a tray transfer position 53, a tray carrying a layer of products that has been conveyed to the tray warehouse 5 via the tray conveyor 4 of the depalletizer 3 is pushed from the forward part 41 of the tray conveyor 4 onto the tray transfer position 53. At a specific tray storage position 57, the tray crane 51 can subsequently place said tray either in the buffer rack 521 or in the picking rack 522. The tray crane 51 can move in longitudinal direction as well as in vertical direction between the buffer rack 521 and the picking rack 522.

On the opposite side of the picking rack 522, three rack operating devices in the form of product robots 54 are provided. The product robots are provided between the picking rack 522 and the product conveyors 61, 62. To fill a picking pallet at the location of a palletizer 7, the central control system will deliver a specific command to a product robot 54. The product robots 54 can remove one or more individual products 11 from the tray 10 present in a tray storage position 57 of a picking rack 522 and place said product(s) on a product conveyor 61, 62. The buffer rack 521 is located beyond the reach of the product robots 54, as the product robot 54 is located behind the picking rack 522, seen from the position of a product robot 54. Each product conveyor 61, 62 extends from the tray warehouse to a palletizer 7, where a stacker 71, 72 stacks products from the product conveyor 61, 62 on a picking pallet. All the products destined for a specific picking pallet are supplied to the stacker 71, 72 via one single product conveyor 61, 62. The product conveyors 61, 62 extend one above the other between two racks 522, at least in the tray warehouse 5. The product robots 54 can thus supply several product conveyors 61, 62 from one picking rack 522 (or, if several robots 54 are used for each rack 522, from a part thereof). Since three robots 54' are provided on the opposite side of the product conveyors 61, 62 as well, which robots can place products from a picking rack 522' onto product conveyors 61, 62, a single product conveyor 61, 62 can eventually be supplied with products from the two picking racks 522, 522' disposed on either side of the conveyor 61, 62 by means of robots 54, 54'.

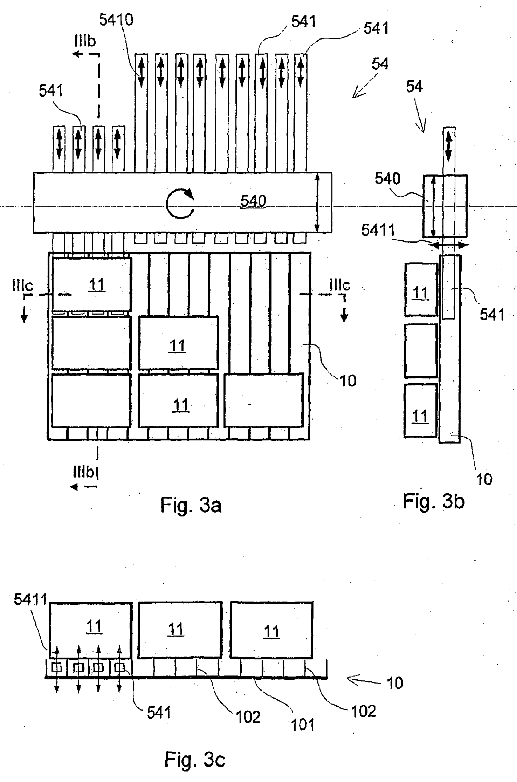

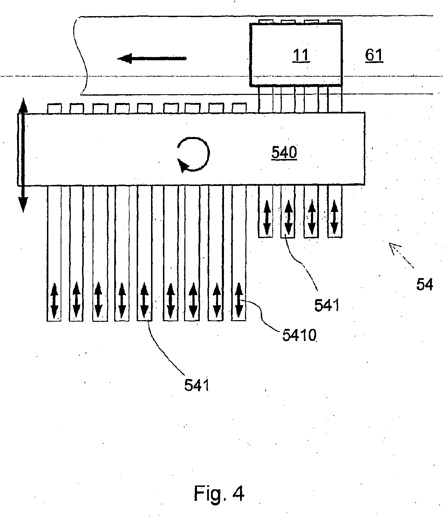

In figures 3a-3c and figure 4 a product robot 54 is schematically shown in more detail. The product robot 54 comprises a base body 540 with a number of parallel rods 541 extending therethrough, which rods are capable of individual translating movement in a direction 5410 with respect to each other and with respect to the base body 540. To lift an individual product 11 from a tray 10, a number of the rods 541 are translated to a position under the product 11 (see in particular figure 3a). As is shown in figure 3c, the space required for the rods 541 under the product 11 in question is realised in that a tray 10 consists of a bottom plate 101, on which a number of mutually parallel ribs 102 extending in vertical direction from the bottom plate 101 are present. The rods 541 are spaced the same distance apart as the ribs 102, so that a rod 541 of the product robot 54 can translate in the direction 5410 between two adjacent ribs 102 of the tray 10.

After the respective rods 541 have been moved under the product 11 to be lifted from the tray 10, the product robot 54 will move slightly upwards (in the direction 5411) in order to thus lift the product 11 from the tray 10. The product robot 54 then moves to a position beyond the reach of the tray 10 and turns about a vertical axis, as a result of which the product 11 is moved to a position above the reach of the product conveyor 61 (see figure 4). The rods 541 are now retracted whilst at the same time the product 11 is held in a position above the product conveyor 61 by means of a pusher element (not shown). The rods 541 may also be provided with a drivable belt extending around the rod 541 in the longitudinal direction of the rod 541 in question. In this case the retraction of the rods 541 can take place in synchrony with the belts being driven in such a manner that the product is moved off the rods. The aforesaid belts extending around the rods can also be used for buffering several products thereon, so that several products from different trays can be collected by means of the rods 541. Within this framework also the buffering of products on an upper surface of the rods themselves may be considered, in which case products can be moved forward and backward over the aforesaid upper surface by suitable pusher means, so that products from different trays can be collected on the product robot 54 in this way as well. As a result of the action of the pusher element or as a result of the aforesaid belts being driven, the product 11 (or possibly several products collected on the product robot) will land on the product conveyor 61. Then the product robot 54 can remove next products from a tray 10.

It is further noted within this framework that it is also possible to lift several products 11 arranged beside each other on a tray 10 from said tray 10 by translating several rods 541, or to lift several products 11 arranged behind each other from a tray 10 by translating the rods 541 over a large distance. The product robot 54 can furthermore be designed to have a symmetric configuration such that the robot need not be rotated through an angle of 180° after a product has been placed on a product conveyor in order to lift a next product from a tray, but that it is also possible to lift a product from a tray 10 by means of the other ends of the rods 541. This possibility is created in that the rods 541 extend through the base body 540 and can thus lift a product on both sides of the base body 540.

The number of three product robots 54 per picking rack 522 and also the number of one tray crane 51 mentioned herein is only given by way of example. Depending on the situation, more or fewer product robots 54 per picking rack 522 and one or more tray cranes 51 per picking rack 522 may be provided, of course. In figure 1 two product conveyors 61, 62 positioned one above the other, at least in the tray warehouse, are furthermore schematically shown. It is possible, of course, to use a larger number than two. In practice, several product conveyors may furthermore terminate at one particular stacker. Said conveyors may likewise be positioned one above the other. In this case all product conveyors but one terminating at one stacker are stationary while a picking pallet is being stacked. Products present on said one active product conveyor can thus be transferred to a picking pallet by the stacker in question. During said stacking, the product robots 54 can place products on the stationary product conveyors. After the stacking of a picking pallet is complete, the pallet is discharged and an empty pallet is placed near the stacker. Now another one of the product conveyors terminating at the stacker in question is activated, so that products from that product conveyor can be stacked on the pallet.

After some time a tray present in a picking rack 522 will become empty. At that point the tray crane 51 will remove said empty tray from the respective picking rack 522 and place it either in the buffer rack 521 temporarily or directly in the tray return position 56. From there the tray is forced onto the return part 42 of the tray conveyor 4 and thus conveyed back to the depalletizer 3. The return part 42, incidentally, is also a belt conveyor. From said return part 42, an empty tray is placed on the belt conveyor 35 and conveyed to a depalletizer 33. At said depalletizer, the empty tray is filled with a layer of products from a pallet again by the depalletizer 33, as described above.

The tray storage position 57 in a picking rack 522 that has thus become empty can be filled on the one hand by a tray that is collected from the tray transfer position 53 and on the other hand by a tray that is already present in a buffer rack 521. The latter is true in particular if, as a result of a temporarily large demand for a particular product in a picking rack 522, the tray comprising the product in question becomes empty and a full tray cannot be supplied (quickly enough) from the pallet warehouse 2 via the tray conveyor 4 at that moment. In practice the capacity of the buffer rack 521 is also used for the temporary storage of a number of trays filled with products from a single emptied pallet. On average, a product pallet comprises eight layers of products, which are thus transferred to, on average, eight trays by a depalletizer 33. To maintain a great diversity of trays with products in the picking rack 522, two of the eight trays, for example, are placed in the picking rack 522 and the other six trays are (temporarily) placed in the buffer rack 522.

Products which are conveyed to a palletizer 7 via a product conveyor 61, 62 in the form of a belt conveyor, are placed on the picking pallet in question by a stacker 71, 72. It is important in this regard that the products arrive at the stacker 71, 72 in the correct order. If that is the case, and additional sorting system 710, 720 need not be provided at the location of the palletizer 7. The stacking of products in a desired order on a picking pallet contributes to the stability of the picking pallet thus stacked, for example, because heavy products are stacked at the bottom, or to the stability of the palletized products per se, for example, because products having a specific shape or dimension are stacked at the bottom, so that a stable stack of products is obtained. Within this framework, it may be considered to anticipate the further processing of a picking pallet at the customer's end and place products on a picking pallet in the order that is desired by the customer.

Causing products on a product conveyor 61, 62 to arrive at a stacker 71, 72 in a desired order is realised in that the central control system can gear the commands to the various product robots 54, 54' to said order. By having a product robot 54, 54' place a product on a product conveyor 61, 62 at the right moment it can thus be achieved that the products will arrive at the stacker 71, 72 in the desired order.

As mentioned above, a sorting device 710, 720 provided between a product conveyor 61, 62 and a stacker 71, 72 can be used for presenting products to the stacker 71, 72 in the correct order as an alternative to the placing of products on the product conveyor 61, 62 in the correct order. In case several product conveyors terminate at one stacker, as described above, it is an option to use one sorting device for each product conveyor, or to use one sorting device for each respective stacker. In the case of the latter sorting device, several product conveyors terminate at the sorting device, therefore.

With regard to the general layout of the system it is further noted that, depending on the situation, it is an option within the framework of the invention to provide the depalletizer 3 in the direct vicinity of the tray warehouse 5. Thus it is possible to leave out the tray conveyor 4, or to use a significantly shorter tray conveyor 4, and, in place thereof, provide a conveyor for conveying pallets from the pallet warehouse 2 to the depalletizer 3 near the tray warehouse 5.

It is also noted that within the framework of the present invention the product conveyors 61, 62 may also extend in longitudinal direction through a picking rack 522, 522' rather than between two picking racks 522, 522'. The advantage of this is that the product robots can be simpler in design in that case, since products in trays as well as product conveyors are present on the same side of the product robots.

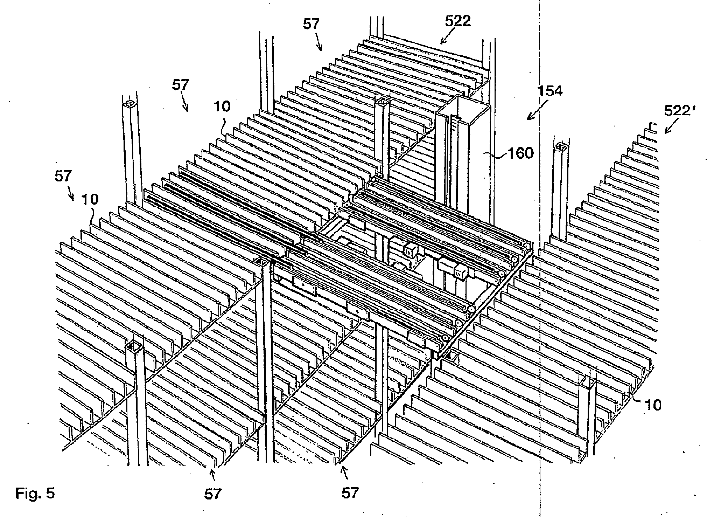

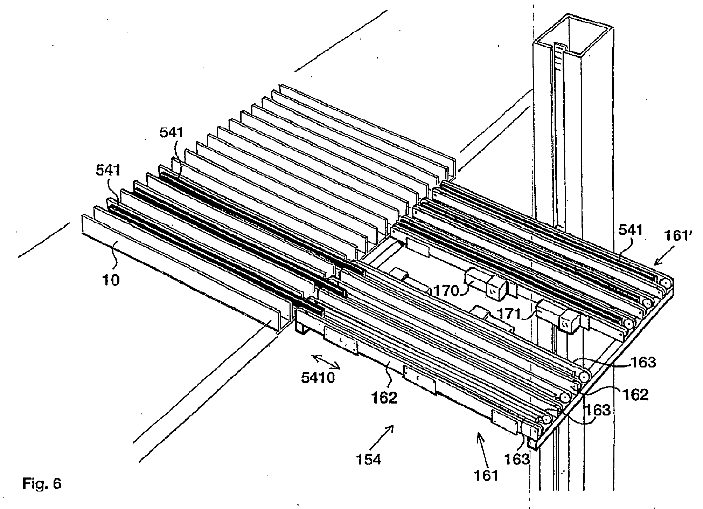

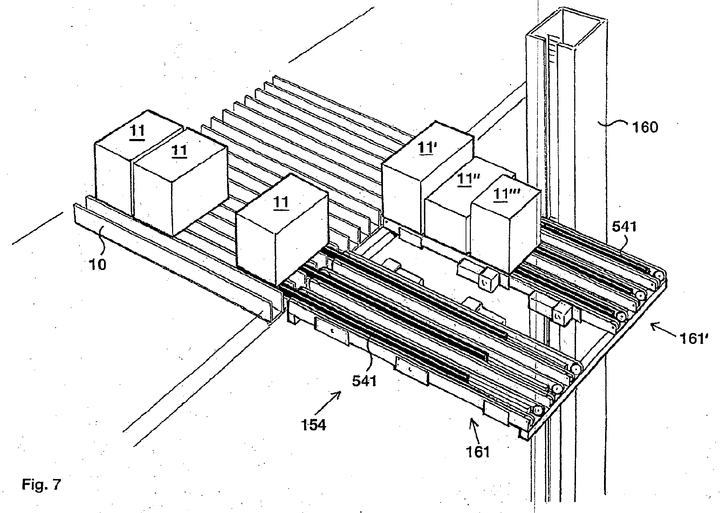

Figures 5-7 show an embodiment of a rack operating device 154. In figure 5 a part of two opposite picking racks 522, 522' is shown, between which the product robot 154 is movable in longitudinal direction and in vertical direction. For easy reference, figure 6 shows only part of that which is shown in figure 5, whilst in figure 7 a few products are additionally shown in comparison with figure 6 so as to illustrate the use of the product robot 154 yet to be described below. It is also possible, however, to use the product robot 154 in the configuration as described above, in which a picking rack is present on one side of the robot and a conveyor is present on the other side.

Although this is not shown in figure 5, product conveyors comparable to the above-described product conveyors 61, 62 are provided at the respective bottom sides of the racks 522, 522', which product conveyors extend through the picking rack 522, 522', seen in the longitudinal direction of the rack. From the description below of the product robot 154 it will appear that, using the product robot 154, products from the rack 522 can be placed on a product conveyor extending through the rack 522 and also on a product conveyor extending through the rack 522', and also that products can be placed from the rack 522' on a product conveyor extending through the rack 522' and also on a product conveyor extending through the rack 522.

The product robot 154 is built up of a frame (not shown in the figures) which can be moved between the racks 522, 522', in the longitudinal direction of said racks, by drive means. Mounted on the frame is a column 160, in which lifting means are arranged for moving a framework (shown at least schematically) provided with two product picking units 161, 161' in the vertical direction of the racks. It is noted within this framework that in those cases where mention is made of moving a product robot in vertical direction, this in fact means that the product picking units provided on the product robot are movable in vertical direction with respect to the racks. Each individual product picking unit 161, 161' comprises three U-shaped sections 162, in which a conveyor belt 163 is provided along the upright side walls of a respective section 162, seen in the longitudinal direction thereof. A guide is provided in the space between the two conveyor belts 163 for guiding a support arm 541 there along. Each product picking unit 161, 161' is built up of three mutually parallel assemblies each comprising a U-section 162, two conveyor belts 163, a guide and a support arm 541. The product robot 154 as shown in figures 5 - 7 comprises two such product picking units 161, 161' provided parallel to each other. It is also possible, of course, to provide a product robot with a single product picking unit, or to provide the product robot with more than two product picking units provided beside and/or above one another, or to provide a separate product picking unit with more or fewer than the three aforesaid support arms 541. Each product picking unit 161, 161' has a drive unit 170 for driving the six (in all) conveyor belts 163 associated with the respective product picking unit, and a drive unit 171, which can be controlled separately from the drive unit 170, for translating the three support arms 541 associated with the respective product picking unit 161, 161' in synchrony with each other in the longitudinal direction of the respective product picking unit, i.e. in the longitudinal direction of the U-sections 162. It is also conceivable within this framework for each of the three support arms 541 associated with a product picking unit 161 to be movable separately from the other support arms, in which case also each pair of conveyor belts 163 provided in a U-section can be driven separately. The support arms 541 can be translated forward and backward in the direction of the two opposite picking racks 522, 522' by means of the drive unit 171, so that it is possible to remove products from trays from both opposite racks using the same support arms.

Now the manner in which products can be picked from trays in the racks 522, 522' by means of a product robot 154 as described above will be explained in more detail. Refer in particular to figure 7 in this regard.

Present on a separate tray in a tray storage position 57 in a picking rack, such as the tray 10 in the picking rack 522 shown in figure 7, are a number of identical products 11, which are arranged on the tray 10 in question in matrix form, as indicated in figure 3a. Two products 11 remaining from two parallel rows of four products 11 each are still present on the tray 10. Of said two rows of identical products, five products were already removed from the tray 10 earlier in the product picking process, whilst a sixth product 11 has just been lifted from the tray 10 by means of the three support arms 541 of the product robot 154, as shown in figure 7, and is being moved back in the direction of the product robot 154. The product robot 154, i.e. the product picking unit 161 of the product robot 154, has to that end first been placed directly in front of the tray 10 and the three support arms 541 forming part of the product picking unit 161 have been moved between the upright edges of the tray 10, in the direction of the product 11 to be picked, by the drive unit 171. After the ends of the support arms 541 have been moved out to a position under the product 11 to be picked, the product picking unit 161 has been translated slightly upwards by the aforesaid lifting means, so that the product 11 to be picked is now supported on the respective support arms 541. The support arms have subsequently been retracted again so as to place the product 11 on the product picking unit 161. The moment an edge of the product 11 supported on the support arms 541 located closest to the product robot 154 comes within the reach of at least a number of the six conveyor belts 163, the conveyor belts 163 will be driven in synchrony with the support arms 541. The product picking unit further comprises sensors (not shown in the figures) for detecting the aforesaid moment when a product comes within the reach of a conveyor belt. Said sensors may be optical sensors or, for example, contact sensors. It is noted in this regard that the aforesaid conveyor belts 163 define a support surface for products, which support surface is located at a slightly higher level than upper surfaces of the respective support arms 541, which likewise define a support surface for products. As a result, at least some of the conveyor belts 163 (the number depending on the width of the product) of the product picking unit 161 in question take over the product 11 from the support arms 541 during the synchronous movement of the support arms 541 and the conveyor belts 163. The moment the product 11 in question is entirely positioned on the conveyor belts 163, the drive of the conveyor belts 163 is stopped, as is the drive of the support arms 541, since the latter are now entirely located within the reach of the product picking unit 166, i.e. are fully retracted. The above analogously applies, of course, when more than one individual product 11 at a time is removed from a tray 10.

The product robot 154 can now be moved with respect to the rack 522 to a tray 10 present at another tray storage position 57 for removing another, different product from the tray 10 in question. Analogously to the foregoing, the support arms 541 are to that end translated in the direction of the product to be picked and subsequently the product is lifted from the tray by moving the assembly of product picking units slightly upwards, using the lifting means. The support arms 541 are then retracted in the direction of the product robot 154, and the moment a front edge of the product comes into contact with the conveyor belts 163, said conveyor belts are driven synchronously with the support arms 541, so that the product is placed directly adjacent to the products that have already been placed on the conveyor belts 163 (as described above). In this way the conveyor belts 163 of the respective product picking unit 161 can be provided with a number of different products picked from different strays along their entire length range.

It is noted in this regard that when products are to be picked from a picking rack 522' located opposite the picking rack 522 as well, products already present on the conveyor belts 163 need to be moved to the end of the conveyor belts located near the rack 522', so that when a product has been lifted from a tray in the rack 522' by means of the support arms in the above-describe manner and is being moved back to the product robot 154, said product can be placed on the conveyor belts 163, adjacent to the products already present on said conveyor belts, in the above describe manner, in order to thus fill the conveyor belts 163 with products from the two opposite racks 522, 522' along the entire length range of the conveyor belts 163.

Three products 11', 11", 11'" from different trays are already present on the product collecting unit 161'. The product picking unit 161' is not active while the product 11 is being picked from the tray 10 in the manner shown in figure 7 and described above. It is of course possible to pick several identical products present side-by-side on a particular tray at the same time by means of the two product picking units 161, 161', or even to pick different products from two opposite trays 10 at the same time.

When the desired number of a plurality of products forming part of a picking order have been collected on the product robot 154, the product 154 will move in the direction of the conveyor, whereupon said products are transferred to the conveyor in question by driving the conveyor belts 163. It is possible in that case to realise a desired order of the products on the product conveyor by removing the products from the product robot 154 in direct or non-direct succession at the same location at the product conveyor. To that end, it is advantageous if the products collected on a respective product picking unit 161, 161' are already present in the correct order on the conveyor belts 163. As an alternative to the placing of the products collected on the product robot 154 on the aforesaid product conveyor it is conceivable to handle the products in a different manner than via a product conveyor, for example by transferring the products to a picking pallet via a buffer position. Using the above-described product robot 154, and also the product robot 54, a very efficient manner of picking products can be realised, since, as described in the foregoing, a number of products forming part of a picking order are first collected from on the product robot 154 itself from different trays, whereupon the product robot 154 moves to a delivery location, for example a product conveyor as described above, so as to discharge said number of products from the product robot 154.

## Claims

1. A method for collecting a number of different products (11) forming part of an order in a product picking system, said product picking system comprising a tray warehouse (5) provided with racks (522, 522') extending parallel to each other, each rack comprising a number of tray storage positions (57) provided beside and above each other, in which tray storage positions a tray carrying a number of identical products is present, and a rack operating device (154) which is movable along and parallel to a rack (522,522') in the longitudinal direction and the vertical direction of said rack (522,522'), which rack operating device (154) is provided with at least one product picking unit(161, 161')comprising a product manipulator (541) and a product buffer (163), wherein products (11) forming part of the order are removed from the rack (522,522') by means of the rack operating device (154), wherein at least two different products (11', 11", 11"') from said number of products (11) forming part of the order are collected on the rack operating device (154) one after the other from different trays (10) present in a tray storage position (57) by means of the rack operating device (154), after which the products (11) placed on said rack operating device (154) are discharged from the rack operating device (154) at a delivery location, wherein the products (11) to be placed on the rack operating device (154) one after the other are removed from said different trays (10) and placed on the product buffer (163) by means of the product manipulator (541), which method is **characterised in that** while a second product (11") of said number of products (11) is being placed from a tray (10) on the product buffer (163), a first product (11'") from another tray (10), which is already present on the product buffer (163), is shifted on the product buffer (163) itself, so that the second product (11") can be placed adjacent to the first product (11'") on the product buffer (163) by means of the product manipulator (541).

2. A method according to claim 1, **characterised in that** products (11) from trays (10) present in two racks (522, 522') disposed on either side of the rack operating device (154) are placed on the rack operating device (154) while different products (11) from different trays (10) are successively being placed on the rack operating device (154).

3. A method according to either one of the preceding claims, **characterised in that** the product picking system further comprises conveying means (61, 62) for conveying products (11) from the delivery location to a picking pallet, which products (11) are transferred from the rack operating device (154) to the conveying means (61, 62) at the delivery location.

4. A method according to claim 3, **characterised in that** if the conveying means comprise a product conveyor (61, 62) for conveying product (11) from the delivery location to the-picking pallet, which delivery location extends along part of the length of the product conveyor (61, 62), whilst at least one product from said number of products (11) is transferred to the product conveyor (61, 62) at a predetermined positionalong the length of the product conveyor (61, 62) each time during the transfer of said number of products (11) to the product conveyor (61, 62).

5. A method according to any one of the preceding claims, **characterised in that** products (11) are discharged from the rack operating device (154) in a desired order at the delivery location.

6. A method according to any one of the preceding claims, **characterised in that** the at least two different products (11) from the number of products forming part of the order which are being collected on the rack operating device (154) itself are placed on the rack operating device (154) in a desired order.

## Patentansprüche

1. Verfahren zum Sammeln mehrerer verschiedener Produkte (11), die einen Teil eines Auftrags in einem Produktkommissionierungssystem bilden, wobei das Produktkommissionierungssystem ein Tablarlager (5), das mit sich parallel zueinander erstreckenden Regalen (522, 522') versehen ist, von denen jedes Regal mehrere nebeneinander und übereinander vorgesehene Tablarlagerungspositionen (57) aufweist, in denen ein mehrere identische Produkte tragendes Tablar vorhanden ist, und eine Regalbedienvorrichtung (154) aufweist, die entlang und parallel zu einem Regal (522, 522') in der Längsrichtung und der vertikalen Richtung des Regals (522, 522') beweglich ist, wobei die Regalbedienvorrichtung (154) mit wenigstens einer Produktkommissionierungseinheit (161, 161') versehen ist, die einen Produktmanipulator (541) und einen Produktpuffer (163) aufweist, wobei Produkte (11), die einen Teil des Auftrags bilden, aus dem Regal (522, 522') mittels der Regalbedienvorrichtung (154) entnommen werden, wobei wenigstens zwei verschiedene Produkte (11', 11", 11'") aus den mehreren Produkten (11), die einen Teil des Auftrags bilden, auf der Regalbedienvorrichtung (154) nacheinander aus verschiedenen Tablaren (10), die in einer Tablarlagerungsposition (57) vorhanden sind, mittels der Regalbedienvorrichtung (154) gesammelt werden, die auf die Regalbedienvorrichtung (154) gelegten Produkte (11) anschließend von der Regalbedienvorrichtung (154) an einer Übergabestelle abgeladen werden, wobei die nacheinander auf die Regalbedienvorrichtung (154) zu legenden Produkte (11) mittels des Produktmanipulators (541) aus den verschiedenen Tablaren (10) entnommen und auf den Produktpuffer (163) gelegt werden, wobei das Verfahren **dadurch gekennzeichnet ist, dass**, während ein zweites Produkt (11") der mehreren Produkte (11) von einem Tablar (10) auf den Produktpuffer (163) gelegt wird, ein erstes Produkt (11'") von einem anderen Tablar (10), das sich bereits auf dem Produktpuffer (163) befindet, auf dem Produktpuffer (163) selbst verschoben wird, sodass das zweite Produkt (11") mittels des Produktmanipulators (541) auf den Produktpuffer (163) neben das erste Produkt (11'") gelegt werden kann.

2. Verfahren nach Anspruch 1, **dadurch gekennzeichnet, dass** Produkte (11) aus Tablaren (10), die sich in zwei Regalen (522, 522') befinden, die auf beiden Seiten der Regalbedienvorrichtung (154) angeordnet sind, auf die Regalbedienvorrichtung (154) gelegt werden, während unterschiedliche Produkte (11) aus unterschiedlichen Tablaren (10) nacheinander auf die Regalbedienvorrichtung (154) gelegt werden.

3. Verfahren nach einem der vorhergehenden Ansprüche, **dadurch gekennzeichnet, dass** das Produktkommissionierungssystem ferner Fördermittel (61, 62) zur Förderung von Produkten (11) von der Übergabestelle zu einer Kommissionierungspalette aufweist, wobei die Produkte (11) an der Übergabestelle von der Regalbedienvorrichtung (154) zu den Fördermitteln (61, 62) umgelagert werden.

4. Verfahren nach Anspruch 3, **dadurch gekennzeichnet, dass**, wenn die Fördermittel einen Produktförderer (61, 62) zum Fördern von Produkten (11) von der Übergabestelle zur Kommissionierungspalette aufweisen, wobei sich die Übergabestelle entlang eines Teils der Länge des Produktförderers (61, 62) erstreckt, während jedes Mal bei der Umlagerung der mehreren Produkte (11) zum Produktförderer (61, 62) wenigstens ein Produkt aus den mehreren Produkten (11) an einer vorbestimmten Position entlang der Länge des Produktförderers (61, 62) auf den Produktförderer (61, 62) umgelagert wird.

5. Verfahren nach einem der vorhergehenden Ansprüche, **dadurch gekennzeichnet, dass** Produkte (11) an der Übergabestelle von der Regalbedienvorrichtung (154) in einer gewünschten Reihenfolge abgeladen werden.

6. Verfahren nach einem der vorhergehenden Ansprüche, **dadurch gekennzeichnet, dass** die wenigstens zwei verschiedenen Produkte (11) aus den mehreren Produkten, die einen Teil des Auftrags bilden, die auf der Regalbedienvorrichtung (154) selbst gesammelt werden, auf die Regalbedienvorrichtung (154) in einer gewünschten Reihenfolge gelegt werden.

## Revendications

1. Procédé de ramassage d'un nombre de produits différents (11) qui font partie d'un ordre dans un système de prélèvement de produit, ledit système de prélèvement de produit comprenant un entrepôt de plateau (5) pourvu d'étagères (522, 522') s'étendant parallèlement les unes aux autres, chaque étagère comprenant un nombre de positions de stockage de plateau (57) disposés côte à côte et l'une au-dessus de l'autre, dans lesquelles positions de stockage de plateau, un plateau portant un certain nombre de produits identiques est présent, et un dispositif d'actionnement d'étagère (154) qui est mobile le long de et parallèle à une étagère (522, 522') dans la direction longitudinale et la direction verticale de ladite étagère (522, 522'), lequel dispositif d'actionnement d'étagère (154) est pourvu d'au moins une unité de prélèvement de produit (161, 161') comprenant un manipulateur de produit (541) et une zone tampon de produit (163), dans lequel des produits (11) faisant partie de l'ordre sont retirés de l'étagère (522, 522') au moyen du dispositif d'actionnement d'étagère (154), dans lequel au moins deux produits différents (11', 11'', 11''') parmi ledit nombre de produits (11) faisant partie de l'ordre sont ramassés sur le dispositif d'actionnement d'étagère (154) l'un après l'autre à partir de différents plateaux (10) présents dans une position de stockage de plateau (57) au moyen du dispositif d'actionnement d'étagère (154), après quoi les produits (11) placés sur ledit dispositif d'actionnement d'étagère (154) sont déchargés du dispositif d'actionnement d'étagère (154) à un emplacement de livraison, dans lequel les produits (11) à placer sur le dispositif d'actionnement d'étagère (154) l'un après l'autre sont retirés desdits différents plateaux (10) et placés sur la zone tampon de produit (163) au moyen du manipulateur de produits (541), lequel procédé est **caractérisé en ce que** pendant qu'un second produit (11'') dudit nombre de produits (11) est placé sur un plateau (10) sur la zone tampon de produit (163), un premier produit (11''') provenant d'un autre plateau (10), qui est déjà présent sur la zone tampon de produit (163), est décalé sur la zone tampon de produit (163) elle-même, de sorte que le second produit (11') peut être placé adjacent au premier produit (11''') sur la zone tampon de produit (163) au moyen du manipulateur du produit (541).

2. Procédé selon la revendication 1, **caractérisé en ce que** des produits (11) provenant de plateaux (10) présents dans deux étagères (522, 522') disposées sur chaque côté du dispositif d'actionnement d'étagère (154) sont placés sur le dispositif d'actionnement d'étagère (154), tandis que différents produits (11) provenant de différents plateaux (10) sont placés successivement sur le dispositif d'actionnement d'étagère (154).

3. Procédé selon l'une ou l'autre des revendications précédentes, **caractérisé en ce que** le système de prélèvement de produit comprend en outre des moyens de transport (61, 62) permettant de transporter des produits (11) depuis l'emplacement de livraison à une palette de prélèvement, lesquels produits (11) sont transférés du dispositif d'actionnement d'étagère (154) aux moyens de transport (61, 62) à l'emplacement de livraison.

4. Procédé selon la revendication 3, **caractérisé en ce que** si les moyens de transport comprennent un transporteur de produit (61, 62) permettant de transporter des produits (11) depuis l'emplacement de livraison à la palette de prélèvement, lequel emplacement de livraison s'étend sur une partie de la longueur du transporteur de produits (61, 62), tandis qu'au moins un produit parmi ledit nombre de produits (11) est transféré vers le transporteur de produits (61, 62) à une position prédéterminée sur la longueur du transporteur de produits (61, 62) à chaque fois pendant le transfert dudit nombre de produits (11) vers le transporteur de produit (61, 62).

5. Procédé selon l'une quelconque des revendications précédentes, **caractérisé en ce que** les produits (11) sont déchargés du dispositif d'actionnement d'étagère (154) dans un ordre souhaité à l'emplacement de livraison.

6. Procédé selon l'une quelconque des revendications précédentes, **caractérisé en ce que** les au moins deux produits différents (11) parmi le nombre de produits faisant partie de l'ordre qui sont ramassés sur le dispositif d'actionnement d'étagère (154) lui-même sont placés sur le dispositif d'actionnement d'étagère (154) dans un ordre souhaité.
